Europäisches Patentamt

European Patent Office

Office européen des brevets

(11) Publication number: **0 380 447**
**A2**

## EUROPEAN PATENT APPLICATION

(21) Application number: 90810046.4

(22) Date of filing: 23.01.90

(51) Int. Cl.5: **A01N 43/82,** //(A01N43/82,
43:10,37:22)

(30) Priority: 24.01.89 GB 8901516

(43) Date of publication of application:
01.08.90 Bulletin 90/31

(84) Designated Contracting States:
AT BE CH DE DK ES FR GB GR IT LI LU NL SE

(71) Applicant: SANDOZ AG
Lichtstrasse 35
CH-4002 Basel(CH)
(84) BE CH DK ES FR GB GR IT LI LU NL SE

Applicant: SANDOZ-PATENT-GMBH
Humboldtstrasse 3
D-7850 Lörrach(DE)
(84) DE

Applicant: SANDOZ-ERFINDUNGEN
Verwaltungsgesellschaft m.b.H.
Brunner Strasse 59
A-1235 Wien(AT)
(84) AT

(72) Inventor: Känel, Rudolf
Hollenweg 75
CH-4144 Arlesheim(CH)

(54) Improvements in or relating to herbicides.

(57) The present invention relates to herbicidal compositions comprising
(a) 2-(3',4'-dichlorophenyl)-4-methyl-1,2,4-oxadiazolidine-3,5-dione and one or more of
(b) (1) 2-chloro-N-(1-methyl-2-methoxyethy)-N-(2,4-dimethyl-thien-3-yl) acetamide,
(2) 2-chloro-N-(2,6-diethylphenyl)-N-(methoxymethyl)acetamide, and
(3) 2-chloro-N-(2-ethyl-6-methylphenyl)-N-(2-methoxy-1-methylethyl)acetamide. and to a method of combatting weeds comprising applying to the weed locus a herbicidally effective aggregate amount of compound (a) and one or more of compounds (b)(1), (b)(2) and (b)(3).

EP 0 380 447 A2

# IMPROVEMENTS IN OR RELATING TO HERBICIDES

The present invention relates to herbicides.

More particularly, the present invention relates to a herbicidal composition comprising

(a) 2-(3',4'-dichlorophenyl)-4-methyl-1,2,4-oxadiazolidine-3,5-dione and one or more of

(b) (1) 2-chloro-N-(2-methoxy-1-methylethyl)-N-(2,4-dimethyl-thien-3-yl) acetamide,

(2) 2-chloro-N-(2,6-diethylphenyl)-N-(methoxymethyl)acetamide, and

(3) chloro-N-(2-ethyl-6-methylphenyl)-N-(2-methoxy-1-methylethyl)acetamide.

Compound (a), having as a common name Methazole, is disclosed in US Patent No. 4,190,431, and has been shown to have herbicidal activity against certain grasses and many broad-leaved weeds.

Compound (b)(1), is disclosed in US Patent No. 4,666,502, and has been shown to have herbicidal activity against a broad spectrum of grasses and broad-leaved weeds.

Compound (b)(2), having as a common name Alachlor, is disclosed in US Patent No. 3,547,620, and has been shown to have herbicidal activity against annual grasses and many broad-leaved weeds.

Compound (b)(3), having as a common name Metolachlor, is disclosed in UK Patent No. 1,438,311, and has been shown to have herbicidal activity mainly against grasses.

It has now been found that the use of Methazole in combination with one or more of compounds (b)(1), (b)(2), and (b)(3) (hereinafter referred to as the combination of this invention) is a surprisingly effective herbicide, and demonstrates selectivity towards corn (maize) and sunflowers. The combination of Methazole and compound (b)(1) demonstrates exceptionally good herbicidal activity and selectivity to corn and sunflowers.

In particular, the combination of this invention demonstrates a synergistic herbicidal effect against many broadleaf weeds, including Abutilon theophrasti, Amaranthus retroflexus, Cassia obtusifolia, Chenopodium album, Datura stramonium, Solanum nigrum, Galium aparine, Impomoea purpurea, Sida spinosa, and Stellaria media, and many grasses, including Brachiaria plantaginea, Bromus tectorum, Sorghum halepense.

Accordingly, this invention provides an improved method of combatting weeds in a locus which comprises applying to the locus a herbicidally effective aggregate amount of Compound (a) and one or more of Compound (b)(1), (b)(2) and (b)(3). In one preferred embodiment, the combination of this invention is applied to a crop locus, pre-emergence of the crop, e.g. pre-emergence of both the crop and weeds in an amount sufficient to combat weeds therein without substantially damaging the crop. The combination of this invention is especially well suited to be used in a crop locus comprising sunflowers and/or corn.

Suitable application rates of the combination of this invention depend upon the particular field crop, but will generally range from 40 to 2000 g/hectare for Methazole and from 40 to 1000 g/ha for component (b).

For loci comprising sunflowers and/or corn, Methazole is applied at a rate of from 40 to 2000 g/hectare, preferably from 100 to 1200 g/ha, more preferably 400 to 1000 g/ha. Especially good results are obtained at about 800 g/ha. Component (b) is applied at a rate of from 40 to 1000 g/ha, preferably from 50 to 400 g/ha, more preferably from 100 to 300 g/ha. Especially good results are obtained at about 200 g/ha.

Suitable weight ratios of Methazole to component (b) depend on various factors such as the mode and time of application, the soil, and the crops involved.

In general, the weight ratio of Methazole to component (b) will range from 1:8 to 40:1, preferably from 1:4 to 12:1, more preferably from 1:1 to 4:1.

For application to loci comprising sunflowers and/or corn, the weight ratio of Methazole to component (b) will range from 1:8 to 24:1, preferably from 1:1 to 12:1, more preferably from 3:2 to 4:1. It is generally preferred that Methazole be present in excess.

The combination of this invention may be employed in any conventional form, for example, in the form of a twin pack, a tank mix, an instant granule, a flowable or a wettable powder in combination with agriculturally acceptable adjuvants. Such compositions may be produced in conventional manner, e.g., by mixing the active ingredients with an adjuvant (carrier, diluent) and other formulating ingredients such as surfactants.

The term adjuvant as used herein means any liquid or solid agriculturally acceptable material which may be added to the active constituents to bring them into an easier or improved applicable form, or to a desired strength of activity. Suitable adjuvants include talc, kaolin, diatomaceous earth, xylene, and water.

In particular, formulations to be applied in spraying forms such as water dispersible concentrates or wet table powders may contain surfactants such as wetting and dispersing agents, e.g. the condensation product of formaldehyde with naphthalene sulphonate, an alkylarylsulphonate, a lignin sulphonate, a fatty alkyl sulphate, an ethoxylated alkylphenol, and an ethoxylated fatty alcohol.

In general, the formulations include from 0.01 to 90 % by weight of active agents, from 0 to 20 % of agriculturally acceptable surfactant, and 10 to 99.99 % of solid or liquid adjuvants. Concentrate forms of compositions generally contain between about 2 and 80 %, preferably between about 5 and 70 % by weight of active agent. Application forms of formulations may, for example, contain from 0.01 to 20 % by weight, preferably from 0.01 to 5 % by weight of active agent.

## HERBICIDAL TESTS

The herbicidal activity of the compounds of this application is demonstrated by experiments carried out for the pre-emergence control of a variety of weeds.

In pre-emergence testing, small plastic greenhouse pots filled with dry soil are seeded with the various weed seeds. Twenty-four hours or less after the seeding, the pots are sprayed with water until the soil is wet and the test compounds sprayed at the indicated application rates on the surface of the soil, employing a spray volume corresponding with 1000 l aqueous test liquid per ha.

Compound (a) is sprayed as aqueous solution of a water dispersible granule (75 WDG; commercially available as PROBE[R]). Compound $(b_1)$ is sprayed as an aqueous solution of a 720 g/l emulsion concentrate in acetone containing emulsifiers. Mixtures of Compound (a) and Compound (b) are sprayed as tank mixes of the above defined aqueous solutions, at the selected weight ratios.

After spraying, the soil containers are placed in the greenhouse and provided with supplementary heat as required and daily or more frequent watering. The plants are maintained under these conditions for a period of from 14 to 28 days, at which time the conditions of the plants and the degree of inhibition of growth to the plants is rated.

The herbicidal activity was determined in two separate tests, effected at different times. One test involved determination of the herbicidal activity against maize, the grasses Avena fatua, Brachiaria plantaginea, Bromus tactorum and Sorghum halepense and the broadleaf weeds Abutilon theophrasti, Cassia obtusifolia, Chenopodium album, Datura stramonium, Impomoea purpurea and Sida spinosa (Table 1).

Another test involved determination of the herbicidal activity against sunflower (var. Mikaflor and Mirasol), Lolium perenne and the broad leaf weeds Amaranthus retroflexus, Chenopodium album, Solanum nigrum, Galium aparine, Sinapis alba and Stellaria media (Table 2).

Whilst the level of herbicidal activity observed may vary depending on the test conditions (atmospheric conditions, soil) etc., the test results clearly indicate synergy against the grasses Avena fatua, Brachiaria plantaginea, Bromus tectorum and Sorghum halepense, and in particular, against broadleaf weeds, including Abutilon theophrasti, Cassia obtusifolia, Chenopodium album, Datura stramonium, Ipomoea purpurea, Solanum nigrum, Galium aparine, Stellaria media and Amaranthus retroflexus, with good crop safety vis-à-vis corn (maize) and sunflower (Tables 3 and 4).

In Tables 1 and 2 inhibition of growth to the plant is indicated in percent. All application rates are given in grams of active ingredient per hectare.

TABLE 1: % Inhibition of Growth to Plants

### Maize (Corn)

| Methazole Application rate (g/ha) | Compound (b)(1) Application rate(g/ha) | | | | | |
|---|---|---|---|---|---|---|
| | 0 | 50 | 100 | 200 | 400 | 800 |
| 0 | 0 | 0 | 0 | 0 | 10 | 20 |
| 250 | 0 | 0 | 0 | 0 | 0 | 10 |
| 500 | 0 | 0 | 0 | 0 | 10 | 20 |
| 1000 | 0 | 0 | 0 | 0 | 10 | 30 |
| 2000 | 0 | 0 | 0 | 0 | 10 | 30 |

### Brachiaria plantaginea

| Methazole Application rate (g/ha) | Compound (b)(1) Application rate(g/ha) | | | | | |
|---|---|---|---|---|---|---|
| | 0 | 50 | 100 | 200 | 400 | 800 |
| 0 | 0 | 40 | 70 | 80 | 90 | 100 |
| 250 | 0 | 60 | 100 | 100 | 100 | 100 |
| 500 | 20 | 50 | 100 | 100 | 100 | 100 |
| 1000 | 100 | 100 | 100 | 100 | 100 | 100 |
| 2000 | 100 | 100 | 100 | 100 | 100 | 100 |

### Bromus tectorum

| Methazole Application rate (g/ha) | Compound (b)(1) Application rate(g/ha) | | | | | |
|---|---|---|---|---|---|---|
| | 0 | 50 | 100 | 200 | 400 | 800 |
| 0 | 0 | 0 | 20 | 30 | 70 | 90 |
| 250 | 0 | 20 | 30 | 50 | 90 | 90 |
| 500 | 10 | 20 | 40 | 70 | 90 | 100 |
| 1000 | 30 | 30 | 50 | 90 | 90 | 100 |
| 2000 | 30 | 70 | 80 | 90 | 100 | 100 |

### Sorghum haleptense

| Methazole Application rate (g/ha) | Compound (b)(1) Application rate(g/ha) | | | | | |
|---|---|---|---|---|---|---|
| | 0 | 50 | 100 | 200 | 400 | 800 |
| 0 | 0 | 20 | 60 | 80 | 90 | 100 |
| 250 | 0 | 40 | 90 | 100 | 100 | 100 |
| 500 | 0 | 40 | 80 | 100 | 100 | 100 |
| 1000 | 30 | 50 | 80 | 100 | 100 | 100 |
| 2000 | 70 | 100 | 100 | 100 | 100 | 100 |

### Abutilon theophrasti

| Methazole Application rate (g/ha) | Compound (b)(1) Application rate(g/ha) | | | | | |
|---|---|---|---|---|---|---|
| | 0 | 50 | 100 | 200 | 400 | 800 |
| 0 | 0 | 10 | 20 | 30 | 30 | 30 |
| 250 | 0 | 20 | 20 | 20 | 30 | 40 |
| 500 | 10 | 20 | 30 | 80 | 100 | 100 |
| 1000 | 100 | 100 | 100 | 100 | 100 | 100 |
| 2000 | 100 | 100 | 100 | 100 | 100 | 100 |

### Cassia obtusifolia

| Methazole Application rate (g/ha) | Compound (b)(1) Application rate(g/ha) | | | | | |
|---|---|---|---|---|---|---|
| | 0 | 50 | 100 | 200 | 400 | 800 |
| 0 | 0 | 0 | 0 | 0 | 0 | 0 |
| 250 | 0 | 0 | 0 | 0 | 0 | 0 |
| 500 | 0 | 0 | 0 | 0 | 0 | 0 |
| 1000 | 0 | 0 | 0 | 50 | 50 | 100 |
| 2000 | 100 | 100 | 100 | 100 | 100 | 100 |

TABLE 1 : Continued

### Chenopodium album

| Methazole Application rate (g/ha) | Compound (b)(1) Application rate (g/ha) | | | | | |
|---|---|---|---|---|---|---|
| | 0 | 50 | 100 | 200 | 400 | 800 |
| 0 | 0 | 0 | 10 | 20 | 30 | 40 |
| 250 | 20 | 30 | 40 | 90 | 100 | 100 |
| 500 | 40 | 60 | 60 | 100 | 100 | 100 |
| 1000 | 100 | 100 | 100 | 100 | 100 | 100 |
| 2000 | 100 | 100 | 100 | 100 | 100 | 100 |

### Datura stramonium

| Methazole Application rate (g/ha) | Compound (b)(1) Application rate (g/ha) | | | | | |
|---|---|---|---|---|---|---|
| | 0 | 50 | 100 | 200 | 400 | 800 |
| 0 | 0 | 10 | 40 | 50 | 60 | 70 |
| 250 | 10 | 20 | 50 | 60 | 70 | 90 |
| 500 | 30 | 70 | 80 | 100 | 100 | 100 |
| 1000 | 100 | 100 | 100 | 100 | 100 | 100 |
| 2000 | 100 | 100 | 100 | 100 | 100 | 100 |

### Ipomoea purpurea

| Methazole Application rate (g/ha) | Compound (b)(1) Application rate (g/ha) | | | | | |
|---|---|---|---|---|---|---|
| | 0 | 50 | 100 | 200 | 400 | 800 |
| 0 | 0 | 0 | 0 | 0 | 20 | 30 |
| 250 | 0 | 20 | 20 | 40 | 40 | 50 |
| 500 | 10 | 20 | 30 | 40 | 40 | 50 |
| 1000 | 30 | 30 | 30 | 40 | 40 | 50 |
| 2000 | 30 | 30 | 40 | 40 | 40 | 50 |

### Sida spinosa

| Methazole Application rate (g/ha) | Compound (b)(1) Application rate (g/ha) | | | | | |
|---|---|---|---|---|---|---|
| | 0 | 50 | 100 | 200 | 400 | 800 |
| 0 | 0 | 20 | 30 | 50 | 60 | 80 |
| 250 | 0 | 20 | 30 | 40 | 40 | 80 |
| 500 | 0 | 30 | 30 | 90 | 90 | 100 |
| 1000 | 80 | 100 | 100 | 100 | 100 | 100 |
| 2000 | 100 | 100 | 100 | 100 | 100 | 100 |

## TABLE 2 : %Inhibition of Growth to Plants

### Sunflower Mikaflor

| Methazole Application rate (g/ha) | Compound (b)(1) Application rate(g/ha) | | | | | |
|---|---|---|---|---|---|---|
| | 0 | 50 | 100 | 200 | 400 | 800 |
| 0 | 0 | 0 | 0 | 0 | 0 | 10 |
| 100 | 0 | 0 | 0 | 0 | 0 | 0 |
| 200 | 0 | 0 | 0 | 0 | 0 | 0 |
| 400 | 0 | 0 | 0 | 0 | 0 | 10 |
| 800 | 0 | 0 | 0 | 0 | 10 | 10 |
| 1200 | 0 | 0 | 0 | 0 | 10 | 10 |

### Sunflower Mirasol

| Methazole Application rate (g/ha) | Compound (b)(1) Application rate(g/ha) | | | | | |
|---|---|---|---|---|---|---|
| | 0 | 50 | 100 | 200 | 400 | 800 |
| 0 | 0 | 0 | 0 | 0 | 0 | 10 |
| 100 | 0 | 0 | 0 | 0 | 0 | 0 |
| 200 | 0 | 0 | 0 | 0 | 0 | 10 |
| 400 | 0 | 0 | 0 | 0 | 0 | 20 |
| 800 | 0 | 0 | 0 | 0 | 10 | 10 |
| 1200 | 0 | 0 | 0 | 0 | 10 | 20 |

### Lolium perenne

| Methazole Application rate (g/ha) | Compound (b)(1) Application rate(g/ha) | | | | | |
|---|---|---|---|---|---|---|
| | 0 | 50 | 100 | 200 | 400 | 800 |
| 0 | 0 | 10 | 20 | 30 | 60 | 90 |
| 100 | 0 | 0 | 30 | 40 | 60 | 90 |
| 200 | 0 | 20 | 30 | 40 | 60 | 70 |
| 400 | 0 | 20 | 30 | 40 | 50 | 80 |
| 800 | 20 | 20 | 20 | 30 | 60 | 90 |
| 1200 | 30 | 30 | 50 | 60 | 70 | 100 |

### Amaranthus retroflexus

| Methazole Application rate (g/ha) | Compound (b)(1) Application rate(g/ha) | | | | | |
|---|---|---|---|---|---|---|
| | 0 | 50 | 100 | 200 | 400 | 800 |
| 0 | 0 | 0 | 10 | 40 | 100 | 100 |
| 100 | 0 | 0 | 20 | 30 | 100 | 100 |
| 200 | 0 | 0 | 0 | 60 | 100 | 100 |
| 400 | 0 | 0 | 0 | 60 | 100 | 100 |
| 800 | 0 | 0 | 20 | 100 | 100 | 100 |
| 1200 | 30 | 0 | 20 | 100 | 100 | 100 |

### Chenopodium album

| Methazole Application rate (g/ha) | Compound (b)(1) Application rate(g/ha) | | | | | |
|---|---|---|---|---|---|---|
| | 0 | 50 | 100 | 200 | 400 | 800 |
| 0 | 0 | 0 | 0 | 0 | 0 | 20 |
| 100 | 0 | 0 | 0 | 0 | 10 | 30 |
| 200 | 0 | 0 | 0 | 10 | 30 | 50 |
| 400 | 0 | 0 | 0 | 60 | 90 | 90 |
| 800 | 20 | 70 | 100 | 100 | 100 | 100 |
| 1200 | 40 | 60 | 70 | 90 | 100 | 100 |

### Solanum nigrum

| Methazole Application rate (g/ha) | Compound (b)(1) Application rate(g/ha) | | | | | |
|---|---|---|---|---|---|---|
| | 0 | 50 | 100 | 200 | 400 | 800 |
| 0 | 0 | 0 | 20 | 50 | 80 | 90 |
| 100 | 0 | 0 | 10 | 30 | 100 | 100 |
| 200 | 0 | 20 | 50 | 60 | 100 | 100 |
| 400 | 10 | 40 | 70 | 90 | 100 | 100 |
| 800 | 10 | 90 | 90 | 100 | 100 | 100 |
| 1200 | 60 | 100 | 100 | 100 | 100 | 100 |

TABLE 2 : Continued

### Galium aparine

| | | Compound (b)(1) Application rate(g/ha) | | | | | |
|---|---|---|---|---|---|---|---|
| | | 0 | 50 | 100 | 200 | 400 | 800 |
| Methazole Application rate (g/ha) | 0 | 0 | 0 | 0 | 20 | 30 | 70 |
| | 100 | 0 | 0 | 0 | 0 | 60 | 70 |
| | 200 | 0 | 0 | 0 | 0 | 80 | 100 |
| | 400 | 0 | 0 | 0 | 10 | 80 | 90 |
| | 800 | 0 | 0 | 20 | 30 | 60 | 100 |
| | 1200 | 0 | 0 | 20 | 40 | 90 | 100 |

### Sinapis alba

| | | Compound (b)(1) Application rate(g/ha) | | | | | |
|---|---|---|---|---|---|---|---|
| | | 0 | 50 | 100 | 200 | 400 | 800 |
| Methazole Application rate (g/ha) | 0 | 0 | 0 | 0 | 0 | 10 | 50 |
| | 100 | 0 | 0 | 0 | 0 | 0 | 0 |
| | 200 | 0 | 0 | 0 | 0 | 0 | 30 |
| | 400 | 0 | 0 | 0 | 0 | 0 | 40 |
| | 800 | 0 | 0 | 0 | 20 | 30 | 50 |
| | 1200 | 0 | 0 | 0 | 30 | 40 | 90 |

### Stellaria media

| | | Compound (b)(1) Application rate(g/ha) | | | | | |
|---|---|---|---|---|---|---|---|
| | | 0 | 50 | 100 | 200 | 400 | 800 |
| Methazole Application rate (g/ha) | 0 | 0 | 0 | 0 | 30 | 50 | 70 |
| | 100 | 0 | 0 | 0 | 10 | 30 | 80 |
| | 200 | 0 | 0 | 0 | 20 | 50 | 100 |
| | 400 | 0 | 10 | 30 | 70 | 90 | 100 |
| | 800 | 90 | 90 | 100 | 100 | 100 | 100 |
| | 1200 | 100 | 100 | 100 | 100 | 100 | 100 |

## SYNERGY

The synergistic effect of various weight ratios of Methazole to compound (b)(1) are determined using the Colby equation

**E = X + Y - (XY-100)**

wherein X is the percent inhibition of growth by herbicide A at p g/ha,

Y is the percent inhibition of growth by herbicide B at q g/ha, and

E is the expected percent inhibition of growth by herbicides A and B at the application rates of p and q, respectively.

If E is lower than the experimentally established percent inhibition of growth, there is synergism.

The values indicated in Tables 3 and 4 represent the difference between the experimentally established percent inhibition of growth and the expected percent inhibition of growth (E) as measured by the Colby equation, for various application rates and weight ratios of Methazole to compound (b)(1). A positive value indicates synergism. All application rates are given in grams of active ingredient per hectare.

TABLE 3 : Synergism

### Maize (Corn)

| | Compound (b)(1) Application rate(g/ha) | | |
|---|---|---|---|
| Methazole Application rate(g/ha) | | 400 | 800 |
| 250 | | -10 | -10 |
| 1000 | | | +10 |
| 2000 | | | +10 |

### Brachiaria plantaginea

| | Compound (b)(1) Application rate(g/ha) | | | | |
|---|---|---|---|---|---|
| Methazole Application rate(g/ha) | | 50 | 100 | 200 | 400 | 800 |
| 250 | | +20 | +30 | +20 | +10 | |
| 500 | | -2 | +24 | +16 | +8 | |

### Bromus tectorum

| | Compound (b)(1) Application rate(g/ha) | | | | |
|---|---|---|---|---|---|
| Methazole Application rate (g/ha) | | 50 | 100 | 200 | 400 | 800 |
| 250 | | +20 | +10 | +20 | +20 | |
| 500 | | +10 | +12 | +33 | +17 | +9 |
| 1000 | | | +6 | +39 | +11 | +7 |
| 2000 | | +40 | +36 | +39 | +21 | +7 |

### Sorghum halepense

| | Compound (b)(1) Application rate(g/ha) | | | | |
|---|---|---|---|---|---|
| Methazole Application rate (g/ha) | | 50 | 100 | 200 | 400 | 800 |
| 250 | | +20 | +30 | +20 | +10 | |
| 500 | | +20 | +20 | +20 | +10 | |
| 1000 | | +6 | +8 | +14 | +7 | |
| 2000 | | +24 | +12 | +6 | +3 | |

### Abutilon theophrasti

| | Compound (b)(1) Application rate(g/ha) | | | | |
|---|---|---|---|---|---|
| Methazole Application rate (g/ha) | | 50 | 100 | 200 | 400 | 800 |
| 250 | | +10 | | -10 | | +10 |
| 500 | | +1 | +2 | +43 | +63 | +63 |
| 1000 | | | | | | |
| 2000 | | | | | | |

### Cassia obtusifolia

| | Compound (b)(1) Application rate(g/ha) | | |
|---|---|---|---|
| Methazole Application rate (g/ha) | | 200 | 400 | 800 |
| 1000 | | +50 | +50 | +100 |

TABLE 3 :  Continued

### Chenopodium album

| Methazole Application rate(g/ha) | Compound (b)(1) Application rate(g/ha) | | | | |
|---|---|---|---|---|---|
| | 50 | 100 | 200 | 400 | 800 |
| 250 | +10 | +12 | +54 | +56 | +48 |
| 500 | +20 | +14 | +48 | +42 | +36 |
| | | | | | |
| | | | | | |

### Datura stramonium

| Methazole Application rate(g/ha) | Compound (b)(1) Application rate(g/ha) | | | | |
|---|---|---|---|---|---|
| | 50 | 100 | 200 | 400 | 800 |
| 250 | +1 | +4 | +15 | +6 | +17 |
| 500 | +33 | +22 | +35 | +28 | +21 |
| | | | | | |
| | | | | | |

### Ipomoea purpurea

| Methazole Application rate (g/ha) | Compound (b)(1) Application rate(g/ha) | | | | |
|---|---|---|---|---|---|
| | 50 | 100 | 200 | 400 | 800 |
| 250 | +20 | +20 | +40 | +20 | +20 |
| 500 | +10 | +20 | +30 | +12 | +13 |
| 1000 | | | | +10 | -4 | -1 |
| 2000 | | | +10 | +10 | -4 | -1 |

### Sida spinosa

| Methazole Application rate (g/ha) | Compound (b)(1) Application rate(g/ha) | | | | |
|---|---|---|---|---|---|
| | 50 | 100 | 200 | 400 | 800 |
| | | | | | |
| 500 | +10 | | +40 | +30 | +20 |
| 1000 | +16 | +14 | +10 | +8 | +4 |

9

TABLE 4: Synergism of Mixtures

**Sunflower Mikaflor**

| Methazole Application rate (g/ha) | Compound (b)(1) Application rate(g/ha) | | | | 400 | |
|---|---|---|---|---|---|---|
| 800 | | | | | +10 | |
| 1200 | | | | | +10 | |

**Sunflower Mirasol**

| Methazole Application rate (g/ha) | Compound (b)(1) Application rate(g/ha) | | | | 400 | 800 |
|---|---|---|---|---|---|---|
| 400 | | | | | | +10 |
| 800 | | | | | +10 | |
| 1200 | | | | | +10 | +10 |

**Lolium perenne**

| Methazole Application rate (g/ha) | Compound (b)(1) Application rate(g/ha) | | |
|---|---|---|---|
| | 50 | 100 | 200 |
| 100 | -10 | +10 | +10 |
| 200 | +10 | +10 | +10 |
| 400 | +10 | +10 | +10 |

TABLE 4 : Continued

**Amaranthus retroflexus**

| Methazole Application rate (g/ha) | Compound (b)(1) Application rate(g/ha) 200 |
|---|---|
| 200 | +20 |
| 400 | +20 |
| 800 | +60 |
| 1200 | +42 |

**Chenopodium album**

| Methazole Application rate (g/ha) | Compound (b)(1) Application rate(g/ha) 50 | 100 | 200 | 400 | 800 |
|---|---|---|---|---|---|
| 100 |  |  |  | +10 | +10 |
| 200 |  |  | +10 | +30 | +30 |
| 400 |  |  | +60 | +90 | +70 |
| 800 | +50 | +80 | +80 | +80 | +64 |
| 1200 | +20 | +30 | +50 | +60 | +48 |

**Solanum nigrum**

| Methazole Application rate (g/ha) | Compound (b)(1) Application rate(g/ha) 50 | 100 | 200 | 400 | 800 |
|---|---|---|---|---|---|
| 200 | +20 | +30 | +10 | +20 | +10 |
| 400 | +30 | +42 | +35 | +18 | +9 |
| 800 | +80 | +62 | +45 | +18 | +9 |
| 1200 | +40 | +32 | +20 | +8 | +4 |

**Galium aparine**

| Methazole Application rate (g/ha) | Compound (b)(1) Application rate(g/ha) | 100 |  | 400 | 800 |
|---|---|---|---|---|---|
| 100 |  |  |  | +30 |  |
| 200 |  |  |  | +50 | +30 |
| 400 |  |  |  | +50 | +20 |
| 800 |  | +20 |  | +30 | +30 |
| 1200 |  | +20 |  | +60 | +30 |

**Sinapis alba**

| Methazole Application rate (g/ha) | Compound (b)(1) Application rate(g/ha) 200 | 400 | 800 |
|---|---|---|---|
| 0 |  |  |  |
| 100 |  |  |  |
| 200 |  |  |  |
| 400 |  |  |  |
| 800 | +20 | +20 |  |
| 1200 | +30 | +30 | +40 |

**Stellaria media**

| Methazole Application rate (g/ha) | Compound (b)(1) Application rate(g/ha) 50 | 100 | 200 | 400 | 800 |
|---|---|---|---|---|---|
| 200 |  |  |  |  |  |
| 400 | +10 | +30 | +40 | +40 | +30 |
| 800 |  | +10 | +7 | +5 | +3 |
| 1200 |  |  |  |  |  |

**Claims**

1. A herbicidal composition comprising a herbicidally effective aggregate amount of
   (a) 2-(3',4'-dichlorophenyl)-4-methyl-1,2,4-oxadiazolidine-3,5-dione and one or more of
   (b) (1) 2-chloro-N-(1-methyl-2-methoxyethyl)-N-(2,4-dimethyl-thien-3-yl) acetamide,
   (2) 2-chloro-N-(2,6-diethylphenyl)-N-(methoxymethyl)acetamide, and
   (3) 2-chloro-N-(2-ethyl-6-methylphenyl)-N-(2-methoxy-1-methylethyl)acetamide.

2. The composition of Claim 1 in a weight ratio of component (a): compound (b) of from 1:8 to 40:1.

3. The composition of Claim 2 in a weight ratio of component (a): compound (b) of from 1:8 to 24:1.

4. The composition of Claim 3 in a weight ratio of component (a): compound (b) of from 1:4 to 12:1.

5. The composition of Claim 4 in a weight ratio of component (a): compound (b) of from 1:1 to 12:1.

6. The composition of Claim 5 in a weight ratio of component (a): compound (b) of from 1:1 to 4:1.

7. The composition of Claim 6 in a weight ratio of component (a): compound (b) of from 3:2 to 4:1.

8. A composition according to any one of Claims 1 to 7 comprising
   (a) 2-(3',4'-dichlorophenyl)-4-methyl-1,2,4-oxadiazolidine-3,5-dione and
   (b) (1) 2-chloro-N-(1-methyl-2-methoxyethyl)-N-(2,4-dimethyl-thien-3-yl) acetamide.

9. A method of combatting weeds in a locus which comprises applying to the locus a herbicidally effective aggregate amount of
   (a) 2-(3',4'-dichlorophenyl)-4-methyl-1,2,4-oxadiazolidine-3,5-dione and one or more of
   (b) (1) 2-chloro-N-(1-methyl-2-methoxyethyl)-N-(2,4-dimethyl-thien-3-yl) acetamide,
   (2) 2-chloro-N-(2,6-diethylphenyl)-N-(methoxymethyl)acetamide, and
   (3) 2-chloro-N-(2-ethyl-6-methylphenyl)-N-(2-methoxy-1-methylethyl)acetamide.

10. The method of Claim 9 wherein the locus is a crop locus and the composition is applied pre-emergence the crop in an amount sufficient to combat weeds therein without substantially damaging the crop.

11. The method of Claim 10 wherein the crop locus comprises at least one of sunflower and corn.